# EUROPEAN PATENT SPECIFICATION

(11) **EP 3 968 003 B1**
(45) Date of publication and mention of the grant of the patent: **14.08.2024**
(21) Application number: 19929103.0
(22) Date of filing: 10.05.2019
(51) Int. Cl.: G01N 15/12, C12Q 1/68, G01N 27/447

(54) **PARTICLE IDENTIFICATION SENSOR AND PARTICLE IDENTIFICATION DEVICE**
TEILCHENIDENTIFIKATIONSSENSOR UND TEILCHENIDENTIFIKATIONSVORRICHTUNG
CAPTEUR D'IDENTIFICATION DE PARTICULES ET DISPOSITIF D'IDENTIFICATION DE PARTICULES

(43) Date of publication of application: 16.03.2022
(73) Proprietor: Aipore Inc., Tokyo, 150-8512 (JP)
(72) Inventor: NAONO, Norihiko, Tokyo 150-8512 (JP)
(74) Representative: Mewburn Ellis LLP
(86) International application number: PCT/JP2019/018837
(87) International publication number: WO 2020/230219

(56) References cited:
- WO-A1-2015/079510
- JP-A- 2017 053 808
- JP-A- 2017 219 327
- JP-A- 2018 048 950
- US-A1- 2004 050 705
- US-A1- 2005 014 162
- US-A1- 2015 014 752
- US-A1- 2017 074 824
- US-A1- 2018 143 178

## Description

### FIELD OF THE INVENTION

The present invention relates to a particle identification sensor and a particle identification device.

### BACKGROUND OF THE INVENTION

There are various methods for identifying submicron-sized particles such as viruses, bacteria, and exosomes, including an optical method such as an induced diffraction grating method (Patent Literature 1) and laser Doppler electrophoresis (Patent Literature 2), a method using nucleic acid probes (Patent Literature 3), and a method using antigen-antibody reaction (Patent Literature 4). However, these methods have problems of lower accuracy, many analysis procedures, and higher costs. In particular, when the identifying particles are bacteria or viruses, lower concentrations of the identifying particles in a specimen often require incubation of the specimen, and no immediate means of identification has been provided.

Therefore, as a new means of identifying submicron-sized particles, a method of measuring a time change of an ion current when the identifying particles in an electrolytic solution pass through a through hole has been proposed (Patent Literatures 5 and 6). Further, a technique has been proposed that combines the time change of the ion current with information processing by machine learning to identify what is the identifying particles, with high accuracy (Patent Literature 7).

Patent Literature 8 suggests an micropore conductivity device having a first flow channel and a second flow channel with a micropore extending therebetween.

### CITATION LIST

### Patent Literatures

[Patent Literature 1] Japanese Patent Application Publication No. 2010-249607 A
[Patent Literature 2] Japanese Patent Application Publication No. 2016-200608 A
[Patent Literature 3] Japanese Patent Application Publication No. 2015-107091 A
[Patent Literature 4] Japanese Patent Application Publication No. 2017-156324 A
[Patent Literature 5] Japanese Patent Application Publication No. 2014-521962 A
[Patent Literature 6] WO 2013/137209 A1
[Patent Literature 7] Japanese Patent Application Publication No. 2017-120257 A
[Patent Literature 8] US Patent Application Publication No. 2017-074824 A1

### SUMMARY OF THE INVENTION

### Problem to be Solved by the Invention

However, the conventional techniques as described above have not yet been widely adopted. The reasons include two major categories of challenges. The challenges in the first category are mainly related to costs and usability of sensors, and the challenges in the second category are mainly related to reliability of the sensors.

Specifically, the challenges in the first category are: (1) cost reduction of the sensor; (2) miniaturization of the sensor; and (3) easy extraction of electrodes from the sensor.

The challenges in the second category are to solve: (4) a problem that the particles to be measured in the electrolytic solution do not pass through the through hole due to adsorption around the through hole; (5) a problem that the time change of the ion current cannot be measured due to the particles to be measured or contaminants blocking the through hole; and (6) a problem that when an amount of identifying particles in the electrolytic solution is lower, the identifying particles are not present near the through hole and cannot be measured; and (7) a problem that although a large number of information (pulses) on the time change of the ion current is required for machine learning, a sufficient number of pulses cannot be observed, and so machine learning cannot be sufficiently performed.

The present invention has been made to solve the above problems. An object of the present invention is to provide a particle identification sensor and a particle identification device, which have high usability and reliability at low cost.

### Means for Solving the Problem

The present invention relates to a particle identification sensor as set forth in claim 1.

The present invention also relates to a particle identification device as set forth in claim 9.

### Effects of Invention

According to the present invention, it is possible to provide a particle identification sensor and a particle identification device, which have high usability and reliability at low cost.

### BRIEF DESCRIPTION OF THE DRAWINGS

FIG. 1 is a schematic enlarged cross-sectional view of a particle identification sensor around a through hole, the particle identification sensor falling outside the scope of present invention;
FIG. 2 is a top view of a particle identification sensor falling outside the scope of present invention;
FIG. 3 is a cross-sectional view taken along the line A-A' in FIG. 2;
FIG. 4 is a cross-sectional view taken along the line B-B' in FIG. 2;
FIG. 5 is a top view of a particle identification sensor according to an embodiment of the present invention;
FIG. 6 is a cross-sectional view taken along the line C-C' in FIG. 5;
FIG. 7 is a cross-sectional view taken along the line D-D' in FIG. 5;
FIG. 8 is graphs showing changes of times (t) of electric potentials (v) applied to first electrodes and second electrodes of the particle identification sensors in FIGS. 5 to 7;
FIG. 9 is graphs showing changes of times (t) of ion currents (i) measured using the particle identification sensors in FIGS. 5 to 7;
FIG. 10 is graphs showing changes of times (t) of electric potentials (v) applied to first electrodes and second electrodes of the particle identification sensors in FIGS. 5 to 7;
FIG. 11 is graphs showing changes of times (t) of ion currents (i) measured using the particle identification sensors in FIGS. 5 to 7; and
FIG. 12 is a conceptual diagram of a particle identification sensor in which m chambers (first flow paths) in a row (horizontal) direction and n chambers (second flow paths) in a column (vertical) direction are arranged in a matrix.

### DETAILED DESCRIPTION OF THE INVENTION

Hereinafter, embodiments according to the present invention will be specifically described. It is to understand that the present invention is not limited to the following embodiments, and various modifications and improvements, which will be within the scope of the present invention, may be made based on ordinary knowledge of a person skilled in the art. Components disclosed in each embodiment may constitute various inventions by appropriate combinations thereof. For example, some components may be deleted from the components shown in each embodiment, or components of different embodiments may optionally be combined.

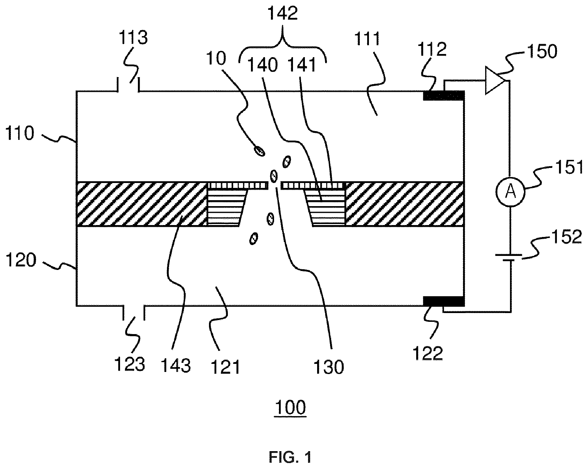

FIG. 1 is a schematic enlarged cross-sectional view of a particle identification sensor around a through hole, the particle identification sensor falling outside the scope of present invention.

As shown in FIG. 1, the particle identification sensor 100 includes: a first flow path (first chamber) 111 formed in a first layer 110; a second flow path (second chamber) 121 formed in a second layer 120; a through hole 130 connecting the first flow path 111 to the second flow path 121; a first electrode 112 disposed in the first flow path 111; and a second electrode 122 disposed in the second flow path 121.

The first flow path 111 and the second flow path 121 have introduction ports 113, 123 for introducing an electrolytic solution containing identifying particles 10 into the first flow path 111 and the second flow path 121, respectively, through which the electrolytic solution containing the identifying particles 10 can pass.

The first flow path 111 and the second flow path 121 are partitioned by a silicon substrate 140, a thin film 141 formed on the silicon substrate 140, and the partition wall 143. The through hole 130 is formed at a central portion of a chip 142 formed of the silicon substrate 140 and the thin film 141.

The first flow path 111 and the second flow path 121 may be or may not be parallel to each other as long as they overlap in the region where the through hole 130 is formed.

In the particle identification sensor 100 having the structure as described above, the identifying particles are identified by introducing the electrolytic solution containing the identifying particles 10 through the introduction ports 113, 123 and filling it in the first flow path 111, the second flow path 121 and the through hole 130, and then measuring a time change of an ion current generated when the identifying particles 10 pass through the through hole 130.

To identify the identifying particles 10, first, the first electrode 112 of the particle identification sensor 100 is electrically connected to an amplifier 150, an ammeter 151, and a power supply 152, and the second electrode 122 of the particle identification sensor is electrically connected to the power supply 152. The power supply 152 provides an electric potential difference between the first electrode 112 and the second electrode 122. The ammeter 151 measures the ion current flowing between the first electrode 112 and the second electrode 122. The amplifier 150 amplifies the signal of the ion current.

An electric potential is then applied between the first electrode 112 and the second electrode 122 using the power supply 152 (for example, a higher electric potential is applied to the first electrode 112 and a lower electric potential is applied to the second electrode 122). The charged identifying particles in the first flow path 111 move from the first flow path 111 to the second flow path 121 via the through hole 130 due to the potential difference. As the identifying particles 10 pass through the through hole 130, the number of ions in the electrolytic solution in the through hole 130 is reduced, so that the ion current between the first electrode 112 and the second electrode 122 is reduced. The identifying particles 10 can be identified by amplifying a transient time change of the ion current with the amplifier 150 and then measuring the amplified time change with the ammeter 151.

Although an example where the higher electric potential is applied to the first electrode 112 and the lower electric potential is applied to the second electrode 122 has been described above, the potential applied between the first electrode 112 and the second electrode 122 may be reversed. In this case, the charged identifying particles 10 in the second flow path 121 can be moved from the second flow path 121 to the first flow path 111 via the through hole 130. According to this configuration, if the through hole 130 is clogged with the identifying particles 10 and/or contaminants in the electrolytic solution, the clogging can be eliminated.

The identification of the identifying particles 10 as described above can be carried out by using the particle identification device including the amplifier 150, the ammeter 151, and the power supply 152. The particle identification device includes: a housing portion housing the particle identification sensor 100 the power supply 152 for applying an electric potential between the first electrode 112 and the second electrode 122 of the particle identification sensor 100; the amplifier 150 for amplifying an ion current flowing between the first electrode 112 and the second electrode 122; and the ammeter 151 for measuring the amplified ion current. The particle identification sensor 100 may be housed in a state where the electrolytic solution containing the identifying particles 10 have been filled in the first flow path 111, the second flow path 121, and the through hole 130, or the particle identification sensor 100 may be housed before the electrolytic solution containing the identifying particles 10 is filled, and the electrolytic solution containing the identifying particles 10 may be filled at the time of measurement.

The use of the particle identification device having the above structure can lead to easy identification of the identifying particles 10.

The particle identification sensor 100 can be produced according to a method known in the art. More particularly, the particle identification sensor 100 can be produced as follows:
First, the through hole 130 is formed in the chip 142 formed of the silicon substrate 140 and the thin film 141. For example, a SiOz thin film is formed on one surface of the silicon substrate 140. The SiOz thin film may be a thermal oxide film of the silicon substrate 140, or the SiOz thin film may be formed by a thermal CVD (Chemical Vapor Deposition) method, a plasma CVD method, or the like.

A resist is then applied onto the SiOz thin film, and the region where the through hole 130 is formed is exposed and developed to form an opening pattern in the resist. For the exposure, a photolithography method, an electron beam drawing method, or the like can be used.

Subsequently, using the formed resist pattern as a mask, the SiOz thin film is etched to form the through hole 130 in the SiOz thin film. The etching may employ wet etching using NH₄F or HF, or anisotropic dry etching such as RIE (Reactive Ion Etching) using CF₄ gas.

After the etching, the resist is peeled off, and a resist is applied to the other surface of the silicon substrate 140. A pattern is then formed such that the region where the through hole 130 should be formed is opened. Using the patterned resist as a mask, the silicon substrate 140 is etched to expose the SiOz thin film around the through hole 130. Finally, the resist used as a mask is removed.

Although the case where the SiOz thin film is used as the thin film 141 has been shown above, various insulating films such as SiN thin films and Al₂O₃ thin films may be used. Further, a substrate formed of glass, sapphire, ceramic, a resin or the like may be used in place of the silicon substrate 140.

Further, as the method for etching the other surface of the silicon substrate 140, a method known in the art can be used. Further, the method for forming the through hole 130 is not limited to the method for forming the through hole 130 in the thin film 141 on the silicon substrate 140. For example, the chip having the through hole 130 may be formed by attaching the thin film 141 having the formed through hole 130 onto the silicon substrate 140 having an opening.

Next, a substrate in which the first flow path 111 is formed (a first layer 110), a substrate in which the second flow path 121 is formed (a second layer 120), and a substrate capable of housing the chip 142 having the formed through hole 130 (a partition wall) are prepared. These can be combined with the chip 142 having the through hole 30 to produce the particle identification sensor 100. The substrates for forming the first layer 110, the second layer 120, and the partition wall 143 may include various substrates such as a silicon rubber substrate and an acrylic substrate, although not limited thereto. Further, the methods for forming the first flow path 111, the second flow path 121, and the like are not particularly limited, and the first flow path 111 and the second flow path 121 can be formed by using a processing method known in the art.

It should be noted that the first electrode 112 and the second electrode 122 may be disposed in advance in the first flow path 111 and the second flow path 121 before assembling the parts, and may be then provided such that the electrodes are extracted by means of wirings such as metal wires and lead frames.

The particle identification sensor 100 can be easily produced at a low cost because of its simple layer structure. Further, the photolithography can be used to reduce the size of the chip having the through hole 130, which will lead to cost reduction.

It should be noted that FIG. 1 shows only an example to illustrate the principle of the particle identification sensor 100. The means of the sensor are not limited to those described above, as long as they can measure the time change of the ion current generated when the identifying particles 10 in the electrolytic solution pass through the through hole 130.

Next, a particle identification sensor 100 falling outside the scope of present invention will be described in detail. In the following description, descriptions of the parts common to those of the particle identification sensor 100 will be omitted.

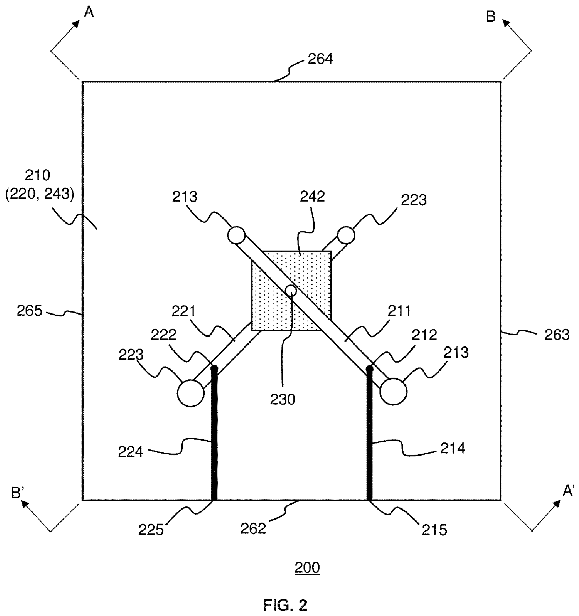

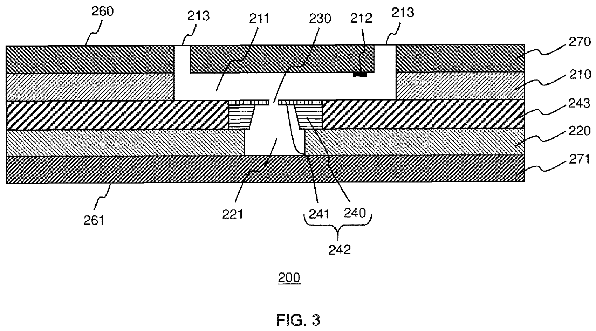

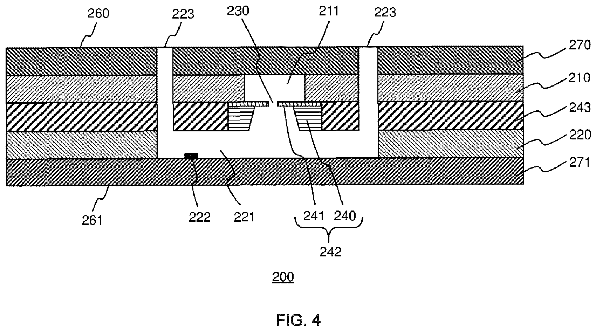

FIG. 2 shows a top view of a particle identification falling outside the scope of present invention. It should be noted that FIG. 2 shows each layer and the partition wall of the particle identification sensor as transparent ones from the viewpoint of easy understanding of the internal structure of the particle identification sensor. Further, FIG. 3 is a cross-sectional view taken along the line A-A' in FIG. 2, and FIG. 4 is a cross-sectional view taken along the line B-B' in FIG. 2.

As shown in FIGS. 2 to 4, a particle identification sensor 200 includes: a first flow path (a first chamber) 211 formed in a first layer 210; a second flow path (a second chamber) 221 formed in a second layer 220; a through hole 230 connecting the first flow path 211 to the second flow path 221; a first electrode 212 arranged in the first flow path 211; and a second electrode 222 arranged in the second flow path 221.

The first flow path 211 and the second flow path 221 have two introduction ports 213, 223 for introducing the electrolytic solution containing the identifying particles 10 into the first flow path 211 and the second flow path 221, respectively, through which the electrolytic solution containing the identified particles 10 can pass. The introduction ports 213, 223 are formed on an upper surface 260 of the particle identification sensor 200, but they may be formed on any one of a lower surface 261 and side surfaces 262, 263, 264, 265.

The first flow path 211 and the second flow path 221 are partitioned by a silicon substrate 240 and a thin film 241 formed thereon, as well as a partition wall 243. The through hole 230 is formed at a central portion of the chip 242 formed of the silicon substrate 240 and the thin film 241.

The first flow path 211 and the second flow path 221 sterically intersect in the region where the through hole 230 is formed. However, the first flow path 211 and the second flow path 221 may be parallel to each other as long as they overlap in the region where the through hole 230 is formed.

Each of the first flow path 211 and the second flow path 221 may have various shape, including, but not limited to, for example, a straight shape and a curved shape.

Further, each of the first flow path 211 and the second flow path 221 may have any width and depth, which may be appropriately adjusted depending on the size of the particle identification sensor 200 to be produced, although not particularly limited.

The positions at which the first electrode 212 and the second electrode 222 are disposed in the first flow path 211 and the second flow path 221 are not particularly limited as long as they can be in contact with the electrolytic solution containing the identifying particles 10.

The first electrode 212 is extracted by a wiring 214 from the space between the first layer 210 and a third layer 270 to the periphery (a side surface 262). Similarly, the second electrode 222 is extracted by a wiring 224 from the space between the second layer 220 and a fourth layer 271 to the periphery (the side surface 262). However, the first electrode 212 and the second electrode 222 may be extracted to side surfaces 263, 264, 265, an upper surface 260 or a lower surface 261 of the particle identification sensor 200. For example, when the first electrode 212 and the second electrode 222 are extracted to the upper surface 260 or the lower surface 261, they may be extracted through via holes. By changing the positions of the first electrode 212 and the second electrode 222, the first electrode 212 and the second electrode 222 can be extracted to a space between layers different from those as described above. If the first electrode 212 and the second electrode 222 are extracted to the side surface 262, 263, 264, 265, it is easier to draw out the first electrode 212 and the second electrode 222 to the periphery because the wirings 214, 224, and the like across the layers are no longer necessary.

For the third layer 270 and the fourth layer 271, a substrate made of the same material as the first layer 210, the second layer 220, and the partition wall 243 can be used.

The method of extracting the first electrode 212 and the second electrode 222 is not particularly limited thereto, and other methods known in the art may be used. For example, the first electrode 212 and the second electrode 222 may be used as extracting electrodes. An end portion 215 of the wiring 214 extracted to the periphery of the particle identification sensor 200 is electrically connected to the amplifier, the ammeter and the power source (which are not shown). Further, the end portion 225 of the wiring 224 extracted to the periphery of the particle identification sensor 200 is electrically connected to the power source (not shown).

The end portions 215, 225 of the wirings 214, 224 may be provided with terminals. The terminals are not particularly limited, and those known in the art may be used. For example, pads, balls or the like connected by solder or the like may be used as the terminals.

In the particle identification sensor 200 having the above structure, the identified particle 10 can be identified by introducing the electrolytic solution containing the identifying particles 10 via the introduction ports 213, 223 to fill it in the first flow path 211, the second flow path 221 and the through hole 230, and then measuring a time change of an ion current generated when the identifying particles 10 pass through the through hole 230.

The electrolytic solution containing the identifying particles 10 is introduced via the introduction ports 213, 223 by a known method such as dropping. The introduction of the electrolytic solution may be carried out by utilizing the capillary phenomenon, or may be carried out by using one of the two introduction ports 213, 223 as an air discharge port, although not limited thereto. Further, when the electrolytic solution containing the identifying particles 10 is introduced into the introduction ports 213, 223, pressurization or depressurization may be performed.

Further, the identification of the identifying particles 10 may be carried out by the same method as that of the particle identification sensor 100.

The identification of the identifying particles 10 as described above can be carried out by using a particle identification device including: an amplifier, an ammeter, and a power supply. The particle identification device includes: a housing portion housing the particle identification sensor 200; a power source for applying an electric potential between the first electrode 212 and the second electrode 222 of the particle identification sensor 200; an amplifier for amplifying the ion current flowing between the first electrode 212 and the second electrode 222; and an ammeter for measuring the amplified ion current. The particle identification sensor 200 may be housed in state where the electrolytic solution containing the identifying particles 10 have been filled in the first flow path 211, the second flow path 221, and the through hole 230, or the particle identification sensor 200 may be housed before the electrolytic solution containing the identifying particles 10 is filled, and the electrolytic solution containing the identifying particles 10 may be filled at the time of measurement.

The use of the particle identification device having the above structure can lead to easy identification of the identifying particles 10.

The particle identification sensor 200 can be produced according to a method known in the art. More particularly, the particle identification sensor 200 can be produced by the same method as that of the particle identification sensor 100.

The particle identification sensor 200 can exert the same effect as that of the particle identification sensor 100 as described above. Further, in the particle identification sensor 200, the first electrode 212 and the second electrode 222 are extracted to one surface (the side surface 262) via the wirings 214, 224, respectively, so that it is easier to connect them to the amplifier, ammeter and power supply than the conventional senser in which the electrodes are extracted to different surfaces. Furthermore, the particle identification sensor 200 has a simpler structure than that of the conventional sensor, and can reduce the number of parts, so that costs can be reduced.

Next, the particle identification sensor having a plurality of through holes will be described in detail with reference to examples of more specific embodiments.

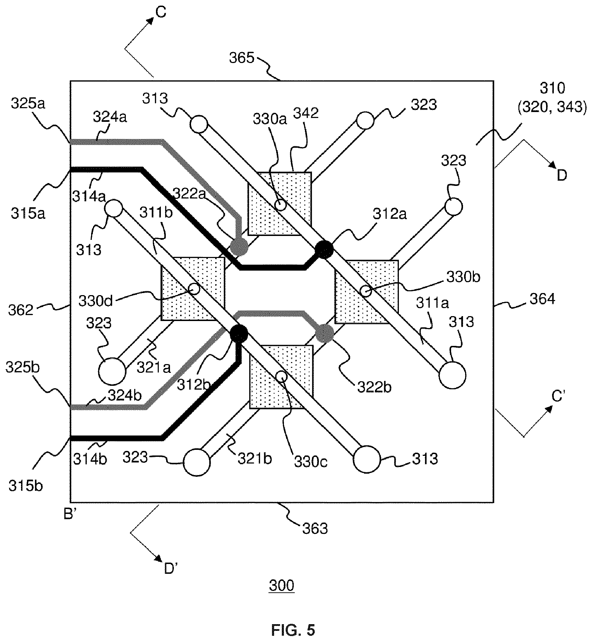

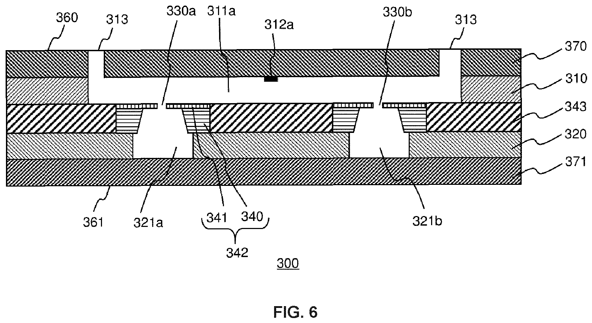

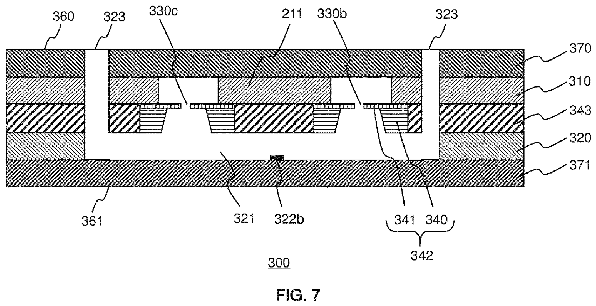

FIG. 5 shows a top view of the particle identification sensor according to an embodiment of the present invention. It should be noted that FIG. 5 shows each layer and the partition wall of the particle identification sensor as transparent ones from the viewpoint of easy understanding of the internal structure of the particle identification sensor. Further, FIG. 6 is a cross-sectional view taken along the line C-C' in FIG. 5, and FIG. 7 is a cross-sectional view taken along the line D-D' in FIG. 5.

As shown in FIGS. 5 to 7, the particle identification sensor 300 according to an embodiment of the present invention includes: two first flow paths (first chambers) 311a, 311b each independently formed in a first layer 310; two second flow paths (second chambers) 321a, 321b each independently formed in a second layer 320; a through hole 330a connecting the first flow path 311a to the second flow path 321a; a through hole 330b connecting the first flow path 311a to the second flow path 321b; a through hole 330c connecting the first flow path 311b to the second flow path 321b; a through hole 330d connecting the first flow path 311b to the second flow path 321a; a first electrode 312a arranged in the first flow path 311a; a first electrode 312b arranged in the first flow path 311b; a second electrode 322a arranged in the second flow path 321a; and a second electrode 322b arranged in the second flow path 321b.

By providing the plurality of through holes 330a, 330b, 330c, 330d, even if any of the plurality of through holes 330a, 330b, 330c, 330d is clogged with the identifying particles 10 and/or contaminants in the electrolytic solution, the identifying particles can be intermittently identified by any of the through holes 330a, 330b, 330c, 330d that are not clogged. Further, even if the number of the identifying particles 10 contained in the electrolytic solution is lower, the probability that the identifying particles 10 pass through any of the plurality of through holes 330a, 330b, 330c, 330d can be increased, so that the performance for identifying the identifying particles 10 can be improved.

The plurality of through holes 330a, 330b, 330c, 330d may have the same or different diameters and depths. The different diameters and depths of the plurality of through holes 330a, 330b, 330c, 330d can allow the identifying particles 10 having various diameters contained in the electrolytic solution to be identified in a single measurement.

The first flow paths 311a, 311b and the second flow paths 321a, 321b have two introduction ports 313, 323 for introducing the electrolytic solution containing the identifying particles 10 into the first flow paths 311a, 311b and the second flow path 321a, 321b, respectively, through which the electrolytic solution containing the identified particles 10 can pass. The introduction ports 313, 323 are formed on an upper surface 360 of the particle identification sensor 300, but they may be formed on any one of a lower surface 661 and side surfaces 362, 363, 364, 365.

Each of the first flow paths 311a, 311b and each of the second flow paths 321a, 321b are partitioned by a silicon substrate 340 and a thin film 341 formed thereon, as well as a partition wall 343. The through holes 330a, 330b are formed at a central portion a chip 342 formed of the silicon substrate 340 and the thin film 341.

Each of the first flow paths 311a, 311b and each of the second flow paths 321a, 321b are overhead-crossed in the region where each through hole 330 is formed. However, each of the first flow paths 311a, 311b and each of the second flow paths 321a, 321b may be parallel to each other as long as they overlap in the region where the through hole 230 is formed.

Each of the first flow paths 311a, 311b and the second flow paths 321a, 321b may have various shape, including, but not limited to, for example, a straight shape and a curved shape.

Further, each of the first flow paths 311a, 311b and the second flow paths 321a, 321b may have any width and depth, which may be appropriately adjusted depending on the size of the particle identification sensor 300 to be produced, although not particularly limited.

The positions at which the first electrodes 312a, 312b and the second electrodes 322a, 322b are disposed in the first flow paths 311a, 311b and the second flow paths 321a, 321b, respectively, are not particularly limited as long as they can be in contact with the electrolytic solution containing the identifying particles 10.

The first electrodes 312a, 312b are extracted by wirings 314a, 314b, respectively, from the space between the first layer 310 and a third layer 370 to the periphery (a side surface 362). Similarly, the second electrodes 322a, 322b are extracted by wirings 324a, 324b, respectively, from the space between the second layer 320 and a fourth layer 371 to the periphery (the side surface 362). However, the first electrodes 312a, 312b and the second electrodes 322a, 322b may be extracted to side surfaces 363, 364, 365, an upper surface 360 or a lower surface 361 of the particle identification sensor 300. For example, when the first electrodes 312a, 312b and the second electrodes 322a, 322b are extracted to the upper surface 360 or the lower surface 361, they may be drawn out through via holes. By changing the positions of the first electrodes 312a, 312b and the second electrodes 322a, 322b, the first electrodes 312a, 312b and the second electrodes 322a, 322b can be extracted to a space between layers different from those as described above. If the first electrodes 312a, 312b and the second electrodes 322a, 322b are extracted to the side surfaces 362, 363, 364, 365, it is easier to draw out the first electrodes 312a, 312b and the second electrodes 322a, 322b to the periphery because the wirings 314a, 314b, 324a, 324b, and the like across the layers are no longer necessary.

For the third layer 370 and the fourth layer 371, a substrate made of the same material as the first layer 310, the second layer 320, and the partition wall 343 can be used.

The method of extracting the first electrodes 312a, 312b and the second electrodes 322a, 322b is not particularly limited thereto, and other methods known in the art may be used. For example, the first electrodes 312a, 312b and the second electrodes 322a, 322b may be used as extracting electrodes. End portions 315a, 315b of the wirings 314a, 314b extracted to the periphery of the particle identification sensor 300 are electrically connected to the amplifiers, the ammeters and the power source (which are not shown). Further, end portions 325a, 325b of the wirings 324a, 324b extracted to the periphery of the particle identification sensor 300 are electrically connected to the power source (not shown).

The end portions 315a, 315b, 325a, 325b may be provided with terminals. The terminals are not particularly limited, and those known in the art may be used. For example, pads, balls or the like connected by solder or the like may be used as the terminals.

In the particle identification sensor 300 having the above structure, the identified particle 10 can be identified by introducing the electrolytic solution containing the identifying particles 10 via the introduction ports 313, 323 to fill it in the first flow paths 311a, 311b, the second flow paths 321a, 321b and the through holes 330, and then measuring a time change of an ion current generated when the identifying particles 10 pass through the through holes 330.

The electrolytic solution containing the identifying particles 10 is introduced via the introduction ports 313, 323 by a known method such as dropping. The introduction of the electrolytic solution may be carried out by utilizing the capillary phenomenon, or may be carried out by using one of the two introduction ports 313, 323 as an air discharge port, although not limited thereto. Further, when the electrolytic solution containing the identifying particles 10 is introduced into the introduction ports 313, 323, pressurization or depressurization may be performed.

To identify the identifying particles 10, first, the end portions 315a, 315b of the wirings 314a, 314b connected to the first electrodes 312a, 312b are electrically connected to the amplifiers, ammeters and power supply, and the end portions 325a, 325b of the wiring 324a, 324b connected to the second electrodes 322a, 322b are electrically connected to the power supply.

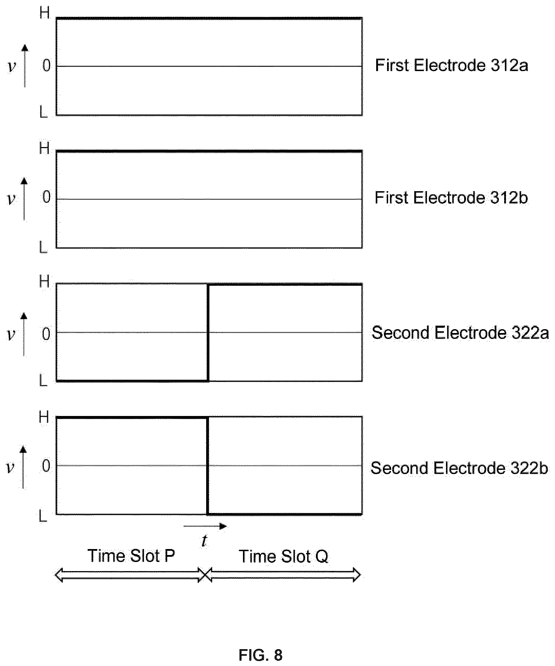

Subsequently, an electric potential as shown in FIG. 8 is applied to the first electrodes 312a, 312b and the second electrodes 322a, 322b by the power source. It should be noted that FIG. 8 shows changes of times (t) of electric potentials (v) applied to the first electrodes 312a, 312b and the second electrodes 322a, 322b. As shown in FIG. 8, in a time slot P, the potentials of the first electrodes 312a, 312b and the second electrode 322b set to High (H), and the potential of the second electrode 322a is set to Low (L). Further, in a time slot Q, the potentials of the first electrodes 312a, 312b and the second electrode 322a are set to High (H), and the potential of the second electrodes 322b is set to Low (L).

In the time slot P, potential differences are generated between the first electrode 312a and the second electrode 322a and between the first electrode 312b and the second electrode 322a. Therefore, the ion current flows through the through hole 330a connecting the first flow path 311a in which the first electrode 312a is arranged to the second flow path 321a in which the second electrode 322a is arranged, and through the through hole 330d connecting the first flow path 311b in which the first electrode 312b is arranged to the second flow path 321a in which the second electrode 322a is arranged. On the other hand, the potential differences are not generated between the first electrode 312a and the second electrode 322b and between the first electrode 312b and the second electrode 322b. Therefore, no ion current flow through the through hole 330b connecting the first flow path 311a in which the first electrode 312a is arranged to the second flow path 321b in which the second electrode 322b is arranged, and through the through hole 330c connecting the first flow path 311b in which the first electrode 312b is arranged to the second flow path 321b in which the second electrode 322b is arranged.

In the time slot Q, potential differences are generated between the first electrode 312a and the second electrode 322b and between the first electrode 312b and the second electrode 322b. Therefore, the ion current flows through the through hole 330b connecting the first flow path 311a in which the first electrode 312a is arranged to the second flow path 321b in which the second electrode 322b is arranged, and through the through hole 330c connecting the first flow path 311b in which the first electrode 312b is arranged to the second flow path 321b in which the second electrode 322b is arranged. On the other hand, the potential differences are not generated between the first electrode 312a and the second electrode 322a and between the first electrode 312b and the second electrode 322a. Therefore, no ion current flow through the through hole 330a connecting the first flow path 311a in which the first electrode 312a is arranged to the second flow path 321a in which the second electrode 322a is arranged, and through the through hole 330d connecting the first flow path 311b in which the first electrode 312b is arranged to the second flow path 321a in which the second electrode 322a is arranged.

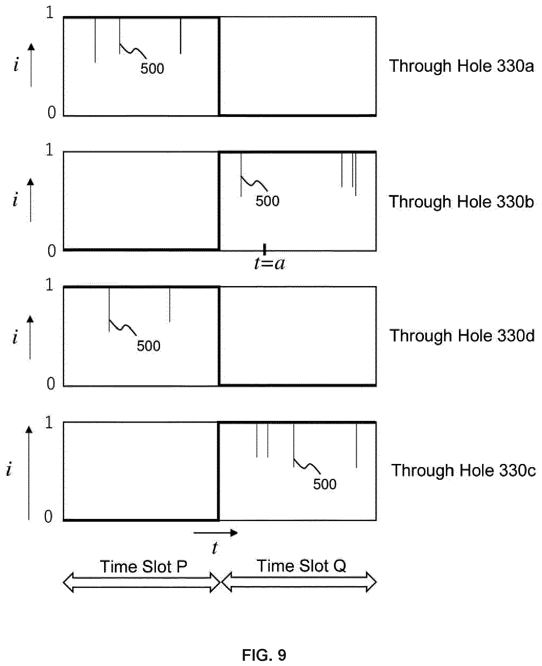

FIG. 9 shows changes of times (t) of ion currents (i) in the time slots P and Q in FIG. 8.

In the time slot P, as described above, the ion current flows through the through holes 330a, 330d, whereas the ion current does not flow through the through holes 330b, 330c. In the through holes 330a, 330d, the ion current is changed and pulses 500 are observed every time the identifying particles 10 contained in the electrolytic solution pass through the through holes 330a, 330d.

In the time slot Q, as described above, the ion current flows through the through holes 330b, 330c, whereas the ion current does not flow through the through holes 330a, 330d. In the through holes 330b, 330c, the ion current is changed and the pulses 500 are observed every time the identifying particles 10 contained in the electrolytic solution pass through the through holes 330a, 330d. The pulses 500 thus obtained can be digitized and machine learning or the like can be then performed to identify the identifying particles 10.

Here, in FIG. 9, we assume a case where the through hole 330b is clogged at time t = a in the time slot Q with the identifying particles 10 and/or contaminants in the electrolytic solution. In this case, after the time t = a, the ion current does not flow through the through hole 330b, and the pulse 500 cannot be observed. Such a phenomenon frequently occurs in an electrolytic solution containing a larger amount of contaminant.

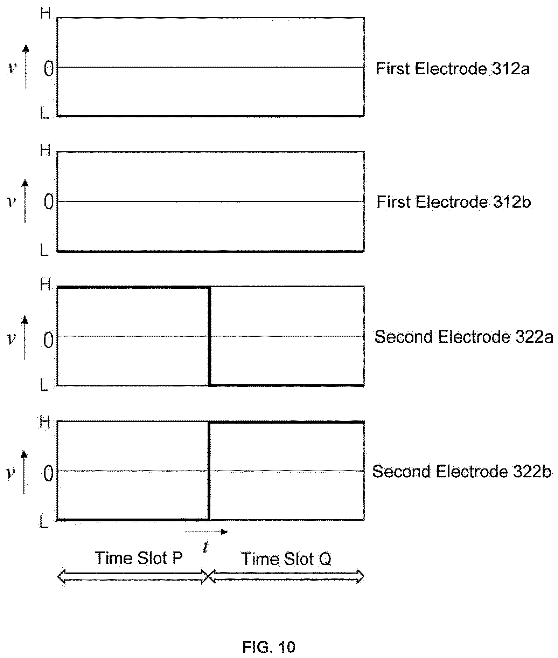

Therefore, the applied potential shown in FIG. 8 is inverted. Specifically, as shown in FIG. 10, in the time slot P, the potentials of the first electrodes 312a, 312b and the second electrode 322b are set to Low (L), and the potential of the second electrode 322a is set to High (H). Further, in the time slot Q, the potentials of the first electrodes 312a, 312b are set to Low (L), and the potential of the second electrode 322b is set to Higher (H).

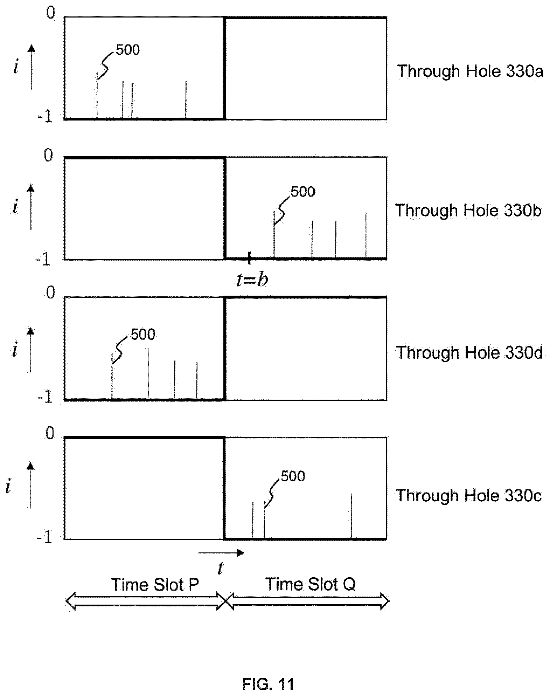

FIG. 11 shows changes of times (t) of ion currents (i) in the time slots P and Q in FIG. 10. As shown in FIG. 11, in the time slot P, the ion current flows through the through holes 330a, 330d as in FIG. 9, but the flow direction thereof is opposite to that in FIG. 9. Further, in the time slot Q, the ion current flows through the through holes 330b, 330c as in FIG. 9, but the flow direction thereof is opposite to that in FIG. 9.

By reversing the applied potential as described above, the flow direction of the identifying particles 10 and/or the contaminants passing through the through holes 330a, 330b, 330c, 330d is reversed. Therefore, the through hole 330b clogged with the identifying particles 10 and/or contaminants in the electrolytic solution at time t = a will release the identifying particles 10 and/or contaminants from the through hole 330b by the opposite flow at the time t = b. Therefore, after the time t = b, the ion current starts to flow in the through hole 330b, and the observation of the pulses 500 can be restarted.

Thus, even if the through holes 330a, 330b, 330c, 330d are clogged with the identifying particles 10 and/or contaminants, the particle identification sensor 300 can avoid unmeasurable situations by reversing the potential applied between the first electrodes 312a, 312b and the second electrodes 322a, 322b. In particular, actual sensing often requires a measurement with an electrolytic solution containing a large amount of contaminant. Therefore, the use of this method can result in a significant expansion of an application range of the particle identification technique that utilizes the time change of the ion current.

The identification of the identifying particles 10 as described above can be carried out by using a particle identification device including amplifiers, ammeters, and a power supply. The particle identification device includes: a housing portion housing the particle identification sensor 300; a power supply for applying an electric potential between each of the first electrodes 312a, 312b and each of the second electrodes 322a, 322b of the particle identification sensor 300; an amplifier for amplifying an ion current flowing between each of the first electrodes 312a, 312b and each of the second electrodes 322a, 322b; and an ammeter for measuring the amplified ion current. The particle identification sensor 300 may be housed in a state where the electrolytic solution containing the identifying particles 10 have been filled in the first flow paths 311a, 311b, the second flow paths 321a, 321b, and the through holes 330a, 330b, 330c, 330d, or the particle identification sensor 300 may be housed before the electrolytic solution containing the identifying particles 10 is filled, and the electrolytic solution containing the identifying particles 10 may be filled at the time of measurement.

The use of the particle identification device having the above structure can lead to easy identification of the identifying particles 10.

Each of FIGS. 5-7 has shown an example in which four chambers (two first flow paths 311a, 311b and two second flow paths 321a, 321b) have been arranged in matrix of two rows and two columns, and their overhead crossing portions have been provided with four chips 342 having through holes 330a, 330b, 330c, 330d, respectively. However, the numbers of chambers (the first and second flow paths) and chips 342 are not particularly limited. For example, the number of the rows and columns of the chambers arranged in matrix may be single or multiple.

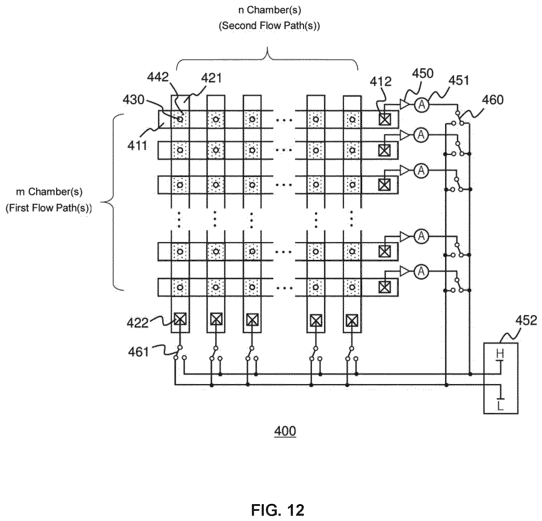

Here, FIG. 12 shows a conceptual diagram of a particle identification sensor in which m chambers (first flow paths) in the row (horizontal) direction and n chambers (second flow paths) in the column (vertical) direction are arranged in matrix.

As shown in FIG. 12, a particle identification sensor 400 has a plurality of (m) first flow paths (chambers) 411 each independently formed in a first layer; a plurality of (n) second flow paths (chambers) 421 each independently formed in a second layer; a plurality of through holes 430 connecting the plurality of first flow paths 411 and the plurality of second flow paths 421; a plurality of first electrodes 412 arranged in the plurality of first flow paths 411; and a plurality of second electrodes 422 arranged in the plurality of second flow paths 421.

In FIG. 12, m and n representing the number of chambers in the row direction and the column direction are represented as a plurality (two or more), but they may be a single number (one). Further, in FIG. 12, the configurations such as the introduction ports of the electrolytic solution containing the identifying particles 10 are omitted.

In the particle identification sensor 400 having the above structure, the identifying particles 10 are identified by introducing the electrolytic solution containing the identifying particles 10 via the introduction ports to fill the solution in the first flow paths 411, the second flow paths 421, and the through holes 430; and then applying an electric potential between each of the first electrodes 412 and each of the second electrodes 422, and measuring a time change of the ion current generated when the identifying particles 10 pass through the through holes 330.

To identify the identifying particles 10, each of the first electrodes 412 is electrically connected to each amplifier 450, each ammeter 451 and a power supply 452, and each of the second electrodes 422 is electrically connected to the power supply 452.

Subsequently, switches 460 on the sides of the first electrodes 412 are tilted to High (H), switches 461 on the sides of the second electrodes 422 are tilted to Low (L), and an electric potential is applied between each of the first electrodes 412 and each of the second electrodes 422. Then, an electric potential difference is generated between each of the first electrodes 412 and the second electrodes 422, and the ion current flows through the through hole 430 connecting the first electrode 412 to the second electrode 422. In this case, for example, as the identifying particles 10 pass through any of the through holes 430, the ion current is changed. Therefore, the change is amplified by the amplifier 450 electrically connected to the first electrode 412 in the first flow path 411 to which the through hole 430 is connected, and then measured by the ammeter 451. Similarly, when the identifying particles 10 pass through the other through holes 430, the change in the ionic current is measured with the amplifiers 45 and the ammeters 45 which are electrically connected to the first electrodes 412 in the first flow paths 411 to which the respective through holes 430 are connected. Such measurement can provide a digitizable pulse-shaped signal as shown in FIGS. 9 and 11.

The identification of the identifying particles 10 as described above can be carried out by using a particle identification device including a plurality of amplifiers 450, a plurality of ammeters 451, and a power supply 452. The particle identification device includes: a housing portion housing a particle identification sensor 400; a power supply 452 for applying an electric potential between each of first electrodes 412 and each of second electrodes 422 of the particle identification sensor 400; a plurality of amplifiers 450 for amplifying an ion current flowing between each of the first electrodes 412 and each of the second electrodes 422; and a plurality of ammeters 451 for measuring the amplified ion current. The particle identification sensor 400 may be housed in a state where the electrolytic solution containing the identifying particles 10 have been filled in the first flow paths 411, the second flow paths 421, and the through holes 330, or the particle identification sensor 400 may be housed before the electrolytic solution containing the identifying particles 10 is filled, and the electrolytic solution containing the identifying particles 10 may be filled at the time of measurement.

The use of the particle identification device having the above structure can lead to easy identification of the identifying particles 10.

According to the particle identification sensor having a plurality of through holes such as the particle identification sensors 300, 400 as described above, the following effects can be produced:
First, since the through holes are formed at the overhead crossing portions of the chambers (first and second flow paths) arranged in matrix, an increase in cost can be suppressed even if the number of through holes is increased. In particular, the conventional method requires an amplifier and ammeter for each through hole in order to measure the ion current, whereas by providing the chambers in the form of matrix, the amplifiers and ammeters may be provided depending on the number of chambers (first flow paths) in the row direction. In other words, if the number (m) of the chambers (first flow paths) in the row direction is one, a particle identification sensor having a plurality of through holes can be easily produced by increasing the number of chambers (second flow paths) in the column direction, as well as a single amplifier and ammeter can be used to measure the ion current. Further, since each electrode is provided for each chamber, there is no need to extract each electrode per each through hole, which is easy and inexpensive to extract the electrode to the periphery of the particle identification sensor. In fact, in an actual particle identification sensor, the time change of the ion current generated when the identifying particles pass through the through hole is extremely small, and it is not always easy to amplify it to a voltage signal that can be digitized, and a circuit for signal amplification often requires an increased cost. Thus, the ability to measure the ion current with decreased numbers of amplifiers and ammeters as compared with the through holes significantly contributes to the cost reduction of the particle identification sensor and the particle identification device including the same.
Second, the particle identification sensor having a single number of through hole has a problem that if the through hole is clogged with the identifying particles and/or contaminates, any subsequent measurement becomes impossible. However, according to the particle identification sensor having a plurality of through holes, (1) even if the through holes are clogged with the identifying particles and/or contaminants, the measurement can be continued by using other through holes; (2) even if the amount of identifying particles in the electrolytic solution is lower and a little or no identifying particle is present near one through hole, a probability that the identifying particles pass through any of the through holes can be increased, which enables the measurement even when an electrolytic solution having a smaller amount of identifying particles; and (3) it is possible to acquire data suitable for machine learning which requires a large amount of pulse information on the time change of the ion current as teacher data.

### Description of Reference Numerals

10 identifying particles
100, 200, 300, 400 particle identification sensor
110, 210, 310 first layer
111, 211, 311a, 311b, 411 first flow path
112, 212, 312a, 312b, 412 first electrode
113,213,313 introduction port
120, 220, 320 second layer
121,221,321a, 321b, 421 second flow path
122, 222, 322a, 322b, 422 second electrode
123,223,323 introduction port
130, 230, 330a, 330b, 330c, 330d, 430 through hole
140, 240, 340 silicon substrate
141,241,341 thin film
142,242,342,442 chip
143,243,343 partition wall
150,450 amplifier
151,451 ammeter
152,452 power supply
260, 360 upper surface
261 and 361 lower surface
262,263,264,265,362,363,364,365 side surface
270,370 third layer
271,371 fourth layer
460,461 switch
500 pulse

## Claims

1. A particle identification sensor (300, 400) for sensing particles (10), the sensor comprising:
a first flow path (311a, 311b, 411) through which an electrolytic solution containing particles (10) can pass, the first flow path (311a, 311b, 411) being formed in a first layer (310); and
a first electrode (312a, 312b, 412) disposed in the first flow path (311a, 311b, 411);
**characterized in that**:
the particle identification sensor (300, 400) further comprises:
a plurality of second flow paths (321a, 321b, 421) through which the electrolytic solution can pass, the second flow paths (321a, 321b, 421) being each independently formed in a second layer (320);
a plurality of through holes (330a, 330b, 330c, 330d, 430) each connecting the first flow path (311a, 311b, 411) to one of the plurality of second flow paths (321a, 321b, 421); and
a plurality of second electrodes (322a, 322b, 422) disposed in the second flow paths (321a, 321b, 421); and
the particle identification sensor (300, 400) is configured to identify the particles (10) by measuring a time change of an ion current generated when the particles (10) pass through the through holes (330a, 330b, 330c, 330d, 430).

2. The particle identification sensor (300, 400) according to claim 1, wherein the first flow path (311a, 311b, 411) and each of the second flow paths (321a, 321b, 421) are parallel to each other.

3. The particle identification sensor (300, 400) according to claim 1, wherein the first flow path (311a, 311b, 411) and each of the second flow paths (321a, 321b, 421) are overhead-crossed in a region where each of the through hole (330a, 330b, 330c, 330d, 430) is formed.

4. The particle identification sensor (300, 400) according to any one of claims 1 to 3, wherein the second flow paths (321a, 321b, 421) are parallel to each other.

5. The particle identification sensor (300, 400) according to any one of claims 1 to 4, wherein the through holes (330a, 330b, 330c, 330d, 430) have different diameters.

6. The particle identification sensor (300, 400) according to any one of claims 1 to 4, wherein the through holes (330a, 330b, 330c, 330d, 430) have the same diameter.

7. The particle identification sensor (300, 400) according to any one of claims 1 to 6, wherein the through holes (330a, 330b, 330c, 330d, 430) have different diameters and depths.

8. The particle identification sensor (300, 400) according to any one of claims 1 to 6, wherein the through holes (330a, 330b, 330c, 330d, 430) have the same diameter and depth.

9. A particle identification device, comprising:
a housing portion housing the particle identification sensor (300, 400) according to any one of claims 1 to 8;
a power supply (452) for applying an electric potential between the first electrode (312a, 312b, 412) and each of the second electrodes (322a, 322b, 422) of the particle identification sensor (300, 400);
an amplifier for amplifying an ion current flowing between the first electrode (312a, 312b, 412) and each of the second electrodes (322a, 322b, 422) of the particle identification sensor (300, 400); and
an ammeter (451) for measuring the amplified ion current.

10. The particle identification device according to claim 9, wherein the ammeter (451) is electrically connected to the first electrode (312a, 312b, 412).

11. The particle identification device according to claim 9, wherein the ammeter (451) is electrically connected to the second electrodes (322a, 322b, 422).

12. The particle identification device according to any one of claims 9 to 11, wherein the electric potential applied between the first electrode (312a, 312b, 412) and each of the second electrodes (322a, 322b, 422) can be reversed.

## Patentansprüche

1. Partikelidentifikationssensor (300, 400) zum Erfassen von Partikeln (10), wobei der Sensor Folgendes umfasst:
einen ersten Strömungspfad (311a, 311b, 411), durch den sich eine elektrolytische Lösung, die Partikel (10) enthält, bewegen kann, wobei der erste Strömungspfad (311a, 311b, 411) in einer ersten Schicht (310) ausgebildet ist; und
eine erste Elektrode (312a, 312b, 412), die im ersten Strömungspfad (311a, 311b, 411) angeordnet ist;
**dadurch gekennzeichnet, dass**:
der Partikelidentifikationssensor (300, 400) weiters Folgendes umfasst:
eine Vielzahl von zweiten Strömungspfaden (321a, 321b, 421), durch welche sich die elektrolytische Lösung bewegen kann, wobei die zweiten Strömungspfade (321a, 321b, 421) jeweils unabhängig voneinander in einer zweiten Schicht (320) ausgebildet sind;
eine Vielzahl von Durchgangslöchern (330a, 330b, 330c, 330d, 430), die jeweils den ersten Strömungspfad (311a, 311b, 411) mit einem aus der Vielzahl von zweiten Strömungspfaden (321a, 321b, 421) verbindet; und
eine Vielzahl von zweiten Elektroden (322a, 322b, 422), die in den zweiten Strömungspfaden (321a, 321b, 421) angeordnet sind; und
der Partikelidentifikationssensor (300, 400) ausgelegt ist, um die Partikel (10) durch Messen einer Zeitänderung eines lonenstroms zu identifizieren, die erzeugt wird, wenn die Partikel (10) sich durch die Durchgangslöcher (330a, 330b, 330c, 330d, 430) bewegen.

2. Partikelidentifikationssensor (300, 400) nach Anspruch 1, wobei der erste Strömungspfad (311a, 311b, 411) und jeder aus den zweiten Strömungspfaden (321a, 321b, 421) parallel zueinander sind.

3. Partikelidentifikationssensor (300, 400) nach Anspruch 1, wobei der erste Strömungspfad (311a, 311b, 411) und jeder aus den zweiten Strömungspfaden (321a, 321b, 421) in einem Bereich, in dem die einzelnen Durchgangslöcher (330a, 330b, 330c, 330d, 430) ausgebildet sind, übereinander überkreuzt sind.

4. Partikelidentifikationssensor (300, 400) nach einem der Ansprüche 1 bis 3, wobei die zweiten Strömungspfade (321a, 321b, 421) parallel zueinander sind.

5. Partikelidentifikationssensor (300, 400) nach einem der Ansprüche 1 bis 4, wobei die Durchgangslöcher (330a, 330b, 330c, 330d, 430) unterschiedliche Durchmesser aufweisen.

6. Partikelidentifikationssensor (300, 400) nach einem der Ansprüche 1 bis 4, wobei die Durchgangslöcher (330a, 330b, 330c, 330d, 430) den gleichen Durchmesser aufweisen.

7. Partikelidentifikationssensor (300, 400) nach einem der Ansprüche 1 bis 6, wobei die Durchgangslöcher (330a, 330b, 330c, 330d, 430) unterschiedliche Durchmesser und Tiefen aufweisen.

8. Partikelidentifikationssensor (300, 400) nach einem der Ansprüche 1 bis 6, wobei die Durchgangslöcher (330a, 330b, 330c, 330d, 430) den gleichen Durchmesser und die gleiche Tiefe aufweisen.

9. Partikelidentifikationsvorrichtung, die Folgendes umfasst:
einen Gehäuseabschnitt, in dem ein Partikelidentifikationssensor (300, 400) nach einem der Ansprüche 1 bis 8 untergebracht ist;
eine Leistungsquelle (452) zum Anlegen von elektrischem Potential zwischen der ersten Elektrode (312a, 312b, 412) und jeder der zweiten Elektroden (322a, 322b, 422) des Partikelidentifikationssensors (300, 400);
einen Verstärker zum Verstärken des lonenstroms zwischen der ersten Elektrode (312a, 312b, 412) und jeder der zweiten Elektroden (322a, 322b, 422) des Partikelidentifikationssensors (300, 400); und
ein Amperemeter (451) zum Messen des verstärkten lonenstroms.

10. Partikelidentifikationsvorrichtung nach Anspruch 9, wobei das Amperemeter (451) elektrisch mit der ersten Elektrode (312a, 312b, 412) verbunden ist.

11. Partikelidentifikationsvorrichtung nach Anspruch 9, wobei das Amperemeter (451) elektrisch mit den zweiten Elektroden (322a, 322b, 422) verbunden ist.

12. Partikelidentifikationsvorrichtung nach einem der Ansprüche 9 bis 11, wobei das elektrische Potential zwischen der erste Elektrode (312a, 312b, 412) und jeder der zweiten Elektroden (322a, 322b, 422) umgekehrt werden kann.

## Revendications

1. Capteur d'identification de particules (300, 400) pour détecter des particules (10), le capteur comprenant :
un premier trajet d'écoulement (311a, 311b, 411) à travers lequel une solution électrolytique contenant des particules (10) peut passer, le premier trajet d'écoulement (311a, 311b, 411) étant formé dans une première couche (310) ; et
une première électrode (312a, 312b, 412) disposée dans le premier trajet d'écoulement (311a, 311b, 411) ;
**caractérisé en ce que** :
le capteur d'identification de particules (300, 400) comprend en outre :
une pluralité de seconds trajets d'écoulement (321a, 321b, 421) à travers lesquels la solution électrolytique peut passer, les seconds trajets d'écoulement (321a, 321b, 421) étant chacun formés indépendamment dans une seconde couche (320) ;
une pluralité de trous traversants (330a, 330b, 330c, 330d, 430) reliant chacun le premier trajet d'écoulement (311a, 311b, 411) à l'un de la pluralité de seconds trajets d'écoulement (321a, 321b, 421) ; et
une pluralité de secondes électrodes (322a, 322b, 422) disposées dans les seconds trajets d'écoulement (321a, 321b, 421) ; et
le capteur d'identification de particules (300, 400) est configuré pour identifier les particules (10) en mesurant un changement de temps d'un courant ionique généré lorsque les particules (10) passent à travers les trous traversants (330a, 330b, 330c, 330d, 430).

2. Capteur d'identification de particules (300, 400) selon la revendication 1, dans lequel le premier trajet d'écoulement (311a, 311b, 411) et chacun des seconds trajets d'écoulement (321a, 321b, 421) sont mutuellement parallèles

3. Capteur d'identification de particules (300, 400) selon la revendication 1, dans lequel le premier trajet d'écoulement (311a, 311b, 411) et chacun des seconds trajets d'écoulement (321a, 321b, 421) sont croisés en hauteur dans une région où chacun des trous traversants (330a, 330b, 330c, 330d, 430) est formé.

4. Capteur d'identification de particules (300, 400) selon l'une quelconque des revendications 1 à 3, dans lequel les seconds trajets d'écoulement (321a, 321b, 421) sont parallèles les uns aux autres.

5. Capteur d'identification de particules (300, 400) selon l'une quelconque des revendications 1 à 4, dans lequel les trous traversants (330a, 330b, 330c, 330d, 430) présentent des diamètres différents.

6. Capteur d'identification de particules (300, 400) selon l'une quelconque des revendications 1 à 4, dans lequel les trous traversants (330a, 330b, 330c, 330d, 430) présentent le même diamètre.

7. Capteur d'identification de particules (300, 400) selon l'une quelconque des revendications 1 à 6, dans lequel les trous traversants (330a, 330b, 330c, 330d, 430) présentent des diamètres et des profondeurs différents.

8. Capteur d'identification de particules (300, 400) selon l'une quelconque des revendications 1 à 6, dans lequel les trous traversants (330a, 330b, 330c, 330d, 430) présentent des diamètres et des profondeurs similaires.

9. Dispositif d'identification de particules, comprenant :
une partie de logement logeant le capteur d'identification de particules (300, 400) selon l'une quelconque des revendications 1 à 8 ;
une alimentation électrique (452) pour appliquer un potentiel électrique entre la première électrode (312a, 312b, 412) et chacune des secondes électrodes (322a, 322b, 422) du capteur d'identification de particules (300, 400) ;
un amplificateur pour amplifier un courant ionique circulant entre la première électrode (312a, 312b, 412) et chacune des secondes électrodes (322a, 322b, 422) du capteur d'identification de particules (300, 400) ; et
un ampèremètre (451) pour mesurer le courant ionique amplifié.

10. Dispositif d'identification de particules selon la revendication 9, dans lequel l'ampèremètre (451) est connecté électriquement à la première électrode (312a, 312b, 412).

11. Dispositif d'identification de particules selon la revendication 9, dans lequel l'ampèremètre (451) est connecté électriquement à la seconde électrode (322a, 322b, 422).

12. Dispositif d'identification de particules selon l'une quelconque des revendications 9 à 11, dans lequel le potentiel électrique appliqué entre la première électrode (312a, 312b, 412) et chacune des secondes électrodes (322a, 322b, 422) peut être inversé.
